# EUROPEAN PATENT APPLICATION

(11) **EP 0 851 660 A2**
(43) Date of publication of application: **01.07.1998**
(21) Application number: 97122820.0
(22) Date of filing: 23.12.1997
(51) Int. Cl.: H04N 1/327

(54) **Error notification method of a facsimile apparatus and facsimile apparatus**

(30) Priority: 30.12.1996 KR 9676738
(71) Applicant: Samsung Electronics Co., Ltd., Suwon City, Kyungki-do (KR)
(72) Inventor: Jeon, Seon-A, Suwon-city, Kyungki-do (KR)
(74) Representative: Grünecker, Kinkeldey, Stockmair & Schwanhäusser Anwaltssozietät

(57) **Abstract**

A method for notifying a remote person of a facsimile error comprises the steps of storing the phone number of the remote person and the error message to notify, checking the facsimile error, dialing the phone number upon detecting the facsimile error; and transmitting the error message to the remote person when the phone number is put through in response to the dialing.

## Description

The invention relates to an error notification method of a facsimile apparatus and to a facsimile apparatus for notifying a remote person of facsimile errors.

Generally, when a facsimile transceiver can not normally receive the facsimile signals due to errors in the facsimile transceiver, an error message is displayed on the display device of the operating panel or a warning tone is generated, whereby the operator can take proper steps to clear the error.

However, since there is not always an operator in the vicinity of the facsimile transceiver who is waiting to take proper steps, the error state of the facsimile transceiver is often left unsolved.

Beside, in case of a transmission line defect or a transmission error, the receiving side can check such errors and can request the sending side to repeat the facsimile transmission, but in case of errors made by the facsimile transceiver itself, the receiving side is unable to take any appropriate measure.

The error of the facsimile transceiver itself includes such cases that the recording paper is run out or a paper jam has occurred.

As aforementioned, when errors are left unsolved, the facsimile transmissions can not be received at all. Therefore, it must be possible that an error of the facsimile transceiver can be notified even when there is no one in the vicinity of facsimile transceiver. But the conventional facsimile transceiver has the drawback that errors can not be checked at all when there is no operator beside the facsimile transceiver.

As described above, the conventional error notifying method of the facsimile transceiver is to simply display error messages on the display device of the operating panel or to generate warning tones, which provides consequently a problem where the facsimile transceiver can not receive facsimile signals when an error has occurred in the facsimile transceiver while there is no one in the vicinity thereof because the proper steps can not be taken.

It is the object of the invention to provide a method and an apparatus for notifying a remote person of a facsimile error.

This object is solved by the subject matters of independent claims 1 and 6.

Preferred embodiments of the invention are defined by the dependent claims.

The invention will now be described more specifically with reference to the following drawings:
Fig. 1 is a block diagram for illustrating the structure of a facsimile transceiver; and
Figs. 2-4 are process flow charts for illustrating a method for notifying a remote person of a facsimile error according to preferred embodiments of the invention.

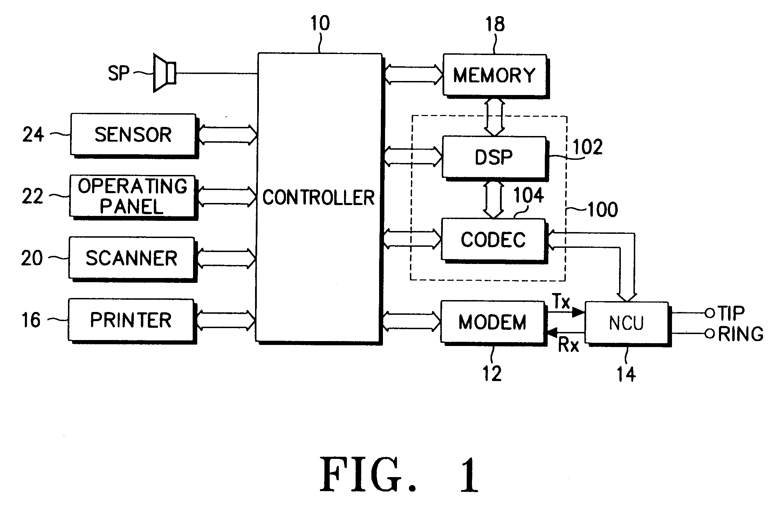

Referring to Fig. 1, the controller 10 controls the overall facsimile transceiver according to a prescribed program and particularly performs a remote error notifying function according to a preferred embodiment of the invention. The modem 12 modulates and demodulates input/output signals between controller 10 and NCU (Network Control Unit) 14 which forms a communication channel between the telephone line and the modem 12 under the control of controller 10. The printer 16 prints out the information under the control of controller 10. The memory 18 stores the operating program of controller 10 and the general control program and the data resulting from the program execution of controller 10. Furthermore, the memory 18 stores various flags indicating facsimile errors, a retrying number of times when called, and the retrying time, etc. and data corresponding to various error messages, subscriber's name and phone number.

The scanner 20 scans a subject copy under the control of controller 10, thereby converting image data into two-valued information so as to be further applied to controller 10. The operating panel 22 having a plurality of keys applies key data produced by keying operations to controller 10, thereby interfacing the user with the controller 10. The operating panel 22 is further provided with a display device displaying the facsimile transceiver's operating state under the control of controller 10. The sensor 24 senses the states of subject copy and recording paper to inform controller 10 thereof. The speaker SP produces a warning tone under the control of controller 10. And the audio processing unit 100 consisting of a coder-decoder (CODEC) 104 and a digital signal processor (DSP) 102 processes the data corresponding to error messages stored in memory 18 under the control of controller 10, thereupon further generating audio signals. The DSP 102 retrieves the data corresponding to the related one of various error messages stored in memory 18 under the control of controller 10, thereby converting the retrieved data to digital signals and delivering the resulting signals to CODEC 104. The CODEC 104 converts the data received from DSP 102 to audio signals to be further delivered to NCU 14.

In order to obtain the function of notifying a remote person of a facsimile error, it is necessary to prepare for the following steps.
1. The step of storing remote notifying information such as information of the remote person.
2. The step of checking facsimile transceiver errors.
3. The step of notifying the remote person of the error.

As described above, the first step is to store the information related to the remote error notification. The related information includes one's own name and phone number, the remote phone number to be notified, the retrying number of times, the retrying time, etc. The user can input the above remote notifying information in a remote notifying information entry mode of the facsimile transceiver, whereby the controller 10 stores such information in memory 18. In the second step after storing the remote notifying information, the controller 10 performs an error checking operation in response to time interrupts repeated at specified time intervals. Thereafter, the controller 10 stores the error data resulted from the error checking in memory 18. When the error detection is verified by rechecking the facsimile transceiver's state checked previously at specified time intervals, in the third step the controller 10 dials the above remote phone number to be notified and, when the communication channel is established, transmits the error message previously stored in memory 18 to the remote subscriber such as a remote facsimile transceiver.

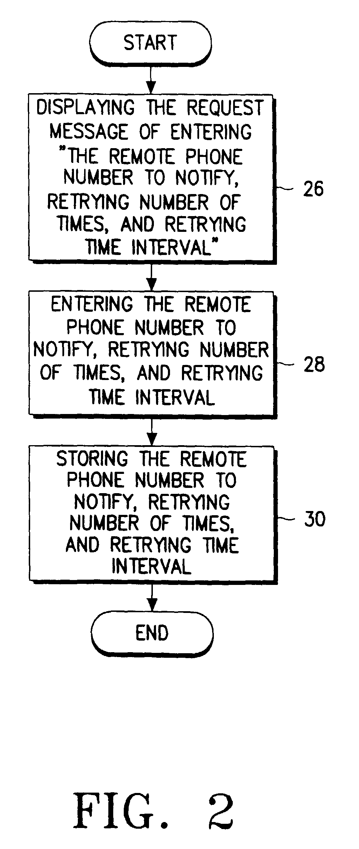

Referring to Fig. 2, the first step of storing the remote notifying information is described in more detail. The process of the flow chart as shown in Fig. 2 starts with the remote notifying information entry mode set by the user. That is, when the user sets the remote notifying information entry mode by keying on the operating panel, the controller 10 performs the step 26 to read out the display data from memory 18 and deliver them to the operating panel 22, thereby displaying the message "Enter phone number to notify, retrying number of times, and retrying time interval" on the operating panel. In response to the displayed message, the user keys in the phone number to be notified, the retrying number of times, and the retrying time interval by means of the operating panel 22. After the above remote notifying information is entered in step 28, the controller 10 proceeds to step 30 to store the above remote notifying information in memory 18, whereby the step of entering and storing the remote notifying information is completed.

In the following, the memory map of memory 18 is described with reference to Table 1 below.

**[Table 1]**

| | |
|---|---|
| Own Name | 40 digits (20 bytes) |
| Own Phone Number | 40 digits (20 bytes) |
| Remote Phone Number to be notified | 40 digits (20 bytes) |
| Message Pointer | Pointer 1 (2 bytes) |
| | Pointer 2 (2 bytes) |
| | Pointer 3 (2 bytes) |
| | Pointer 4 (2 bytes) |
| Error flag | 1 byte |
| Remote Error notifying flag | 1 byte |
| Retrying number of times flag | 1 byte |
| Current Retrying number of times flag | 1 byte |
| Retrying time interval flag | 1 byte |
| Current retrying time interval flag | 1 byte |

As illustrated in Table 1, the memory 18 stores the own name, the own phone number, the remote phone number to be notified, the message pointers, etc. and further comprises an error flag, a remote error notifying flag, a retrying number of times flag, a current retrying number of times flag, a retrying time interval flag, and a current retrying time interval flag. The above own name and own phone number are stored in advance in memory 18 to each of which 20 bytes are allocated so that each can include characters up to 40 figures. Besides, the remote phone number to be notified can be entered in the remote notifying information entry mode by the user to which 20 bytes are allocated so that characters up to 40 figures can be included. And the message pointer stores information about the pointers in the memory 18 containing audio data for providing audio information at the time of remote error notification.

Since the preferred embodiment of the invention is described with reference to an example of four kinds of audio information, the above message pointer consists of pointers 1-4, and each pointer consists of 2 bytes. An example of the above message pointer is shown in Table 2 below.

**[Table 2]**

| Types of Errors | Message Pointer |
|---|---|
| Error 1 | A0 |
| Error 2 | A1 |
| Error 3 | A2 |
| Error 4 | A3 |

In the above table 2, Error 1 means an unidentified error, and Error 2 indicates that the recording paper is run out, and Error 3 indicates that the recording paper is jammed, and Error 4 indicates that the original copy is jammed. And the pointer in the memory storing the message to be notified when Error 1 has occurred is A0, and Error 2 corresponds to A1, Error 3 to A2, and Error 4 to A3.

The messages stored in the above pointers are shown in the following table 3.

**[Table 3]**

| Pointer | Message |
|---|---|
| A0 | Basic Message |
| A1 | Paper run out. Please load paper quickly! |
| A2 | Paper jam occurred. Please clear jam quickly! |
| A3 | Original copy jammed. Please clear jam quickly! |

As shown in Table 3, the pointer A0 stores "basic message" indicating that the error detected is not identified. The pointer A1 stores the audio message data "Paper run out. Please load paper quickly!" for notifying that the recording paper is run out. The pointer A2 stores the audio message data "Paper jam occurred. Please clear the jam quickly!" for notifying that the paper jam has occurred. The pointer A3 stores the audio message data "Original copy jammed. Please clear the jam quickly!" for notifying that the original copy is jammed.

In the above table 1, the error flag stores the information about the facsimile transceiver's errors. The above error flag consists of one byte, that is, of eight bits. The above eight bits each store different errors. The following table 4 shows the preferred embodiment of the above error flag.

**[Table 4]**

| Name | Corresponding bit | | | | | Expression | |
|---|---|---|---|---|---|---|---|
| general communication error bits | 7 | 6 | 5 | 4 | 3 | error: | 11111 |
| | | | | | | normal: | 00000 |
| original copy jam error bit | 2 | | | | | jam occurred: | 1 |
| | | | | | | jam not occurred: | 0 |
| paper jam error bit | 1 | | | | | jam occurred: | 1 |
| | | | | | | jam not occurred: | 0 |
| paper error bit | 0 | | | | | paper not loaded: | 1 |
| | | | | | | paper loaded: | 0 |

As illustrated in the above table 4, the above error flag comprises the paper error bit, the paper jam error bit, the original copy jam error bit, and the general communication error bit so as to store the information about every facsimile error. In the above error flag, the paper checking is represented by bit position 0, whereby if the recording paper is not loaded, the bit position 0 is expressed by 1, and if paper is loaded, the bit position 0 is expressed by 0. And the paper jam error is represented by bit position 1, whereby if paper jam has occurred, the bit position 1 is expressed by 1, and otherwise by 0. The original paper jam error is represented by bit position 2, whereby if original paper jam has occurred, the bit position 2 is expressed by 1, and otherwise by 0. General communication errors are represented by bit positions 3 through 7, whereby if a general communication error has occurred, the above bit positions are expressed by 11111, and if the communicating state is normal, the above bit positions are expressed by 00000, that is, when the eight bits of the error flag are all expressed by 0, it means that the facsimile transceiver is in normal condition, but if any one of the above bit positions is expressed by 1, it means that an error corresponding to the bit position expressed by 1 has occurred.

In the above table 1, the Remote Error notifying flag stores only errors to be remotely notified from the information contained in the error flag. The above remote error notifying flag consists of 1 byte, i.e., of 8 bits. Each of the above bits stores different error information. A preferred embodiment of the remote error notifying flag is shown in the following table 5.

**[Table 5]**

| Name | Corresponding Bit position | | | | | Expression | |
|---|---|---|---|---|---|---|---|
| Spare bits | 7 | 6 | 5 | 4 | 3 | None | |
| Original copy jam checking bit | 2 | | | | | jam occurred: | 1 |
| | | | | | | jam not occurred: | 0 |
| Paper jam checking bit | 1 | | | | | jam occurred: | 1 |
| | | | | | | jam not occurred: | 0 |
| Paper checking bit | 0 | | | | | paper not loaded: | 1 |
| | | | | | | paper loaded: | 0 |

As shown in table 5, the above Remote Error notifying flag consists of a paper checking bit, a paper jam checking bit, an original copy jam checking bit, and spare bits, thereby storing information about various errors. The above paper checking bit of the remote error notifying flag is represented by the bit position 0, whereby if paper is not loaded, the bit position 0 is expressed by 1, and if any the bit position 0 is expressed by 0. And the paper jam checking bit is represented by the bit position 1, whereby if paper jam has occurred, the bit position 1 is expressed by 1, and otherwise by 0. The original copy jam checking bit is represented by the bit position 2, whereby if original copy jam has occurred, the bit position 2 is expressed by 1, and otherwise by 0. The spare bits are not used. Accordingly, if any one of the bit positions 0, 1, 2 of the remote error notifying flag is expressed by 1, the controller 10 notifies the facsimile error to the remote facsimile transceiver. That is, the controller 10 checks the state of the above remote error notifying flag at every specified time interval, whereby if any one of the above bit positions 0, 1, 2 is expressed by 1, the controller 10 notifies the remote facsimile transceiver of the facsimile error corresponding to the bit position expressed by 1.

The retrying number of times flag as shown in the above table 1 can be entered by the user in the above remote notifying information entry mode. That is, when the retrying number of times is entered by the user, the controller 10 stores the retrying number of times in the retrying number of times flag which consists of 1 byte, i.e., of 8 bits. The preferred embodiment of the retrying number of times flag is shown in the following table 6.

**[Table 6]**

| Name | Spare bits | | | | | Bits used for Retrying number of times | | |
|---|---|---|---|---|---|---|---|---|
| Corresponding Bit Position | 7 | 6 | 5 | 4 | 3 | 2 | 1 | 0 |

As shown in the above table 6, the bit positions used for storing the retrying number of times in the retrying number of times flag are 0, 1, 2, and the remaining bit positions are not used. An example of the retrying number of times stored in the bit positions 0, 1, 2 by the user is shown in the following table 7.

**[Table 7]**

| Bit position and expression of Retrying number of times | | | Retrying Number of Times |
|---|---|---|---|
| 2 | 1 | 0 | |
| 0 | 0 | 0 | 0 |
| 0 | 0 | 1 | 1 |
| 0 | 1 | 0 | 2 |
| 0 | 1 | 1 | 3 |
| 1 | 0 | 0 | 4 |
| 1 | 0 | 1 | 5 |
| 1 | 1 | 0 | 6 |
| 1 | 1 | 1 | 7 |

As shown in the above table 7, the retrying number of times can be expressed up to seven according to the states of the bit positions 0, 1, 2, and accordingly, the user can enter 0 through 7 as the retrying number of times.

Referring to Table 1, the current retrying number of times is stored in the current retrying number of times flag by the controller 10. That is, the controller 10 counts the retrying number of times every time of retrying, thereby storing the resulting value counted in the above current retrying number of times flag. Thereupon, the controller 10 compares the current counted value with the retrying number of times stored in the retrying number of times flag, thereby detecting the remaining number of times for retrying. The flag format of the above current retrying number of times flag is the same as that of the above retrying number of times flag, and therefore, the detailed description of the current retrying number of times flag is omitted.

Referring to the table 1, the retrying time interval flag stores the retrying time interval for retrying the error checks in order to provide against the remaining errors not cleared even after notifying the facsimile error to the remote facsimile transceiver. The above retrying time interval is entered by the user's key-entry in the above remote notifying information entry mode. The retrying time interval flag consists of 1 byte, i.e., of 8 bits, whereby the retrying time interval is represented by the state of the bit positions of the retrying time interval flag an example of which is illustrated in the following table 8.

**[Table 8]**

| Name | Spare Bits | | | | | Bits used for Retrying time Interval | | |
|---|---|---|---|---|---|---|---|---|
| Corresponding Bit Position | 7 | 6 | 5 | 4 | 3 | 2 | 1 | 0 |

As shown in the above table 8, the bit positions used for representing the retrying time interval are 0, 1, 2. An example of the retrying time interval stored in the bit positions 0, 1, 2 by the user is shown in the following table 9.

**[Table 9]**

| Bit position and expression of Retrying Time Interval | | | Retrying time interval |
|---|---|---|---|
| 2 | 1 | 0 | |
| 0 | 0 | 0 | 10 Minutes |
| 0 | 0 | 1 | 20 Minutes |
| 0 | 1 | 0 | 30 Minutes |
| 0 | 1 | 1 | 1 Hour |
| 1 | 0 | 0 | 2 Hours |
| 1 | 0 | 1 | 3 Hours |
| 1 | 1 | 0 | 5 Hours |
| 1 | 1 | 1 | 24 Hours |

As shown in the above table 9, the retrying time interval can be expressed by selecting one of eight intervals from 10 minutes to 24 hours. Accordingly, the user can set the retrying time interval to one of the above eight intervals.

Referring to the above table 1, the current retrying time interval flag stores the time data counted from the time when the controller 10 notified the remote facsimile transceiver of the facsimile error most recently. That is, the controller 10 counts the time lapsed from the current retrying start time, whereby if the time lapsed is 10 minutes, the bit positions 0, 1, 2 of the current retrying interval flag are set to 0,0,0, and if the time lapsed is 20 minutes, the above bit positions are set to 0,0,1. Thereupon, when the current retrying time interval flag is equal to the retrying time interval, the controller 10 retries the remote notifying operation.

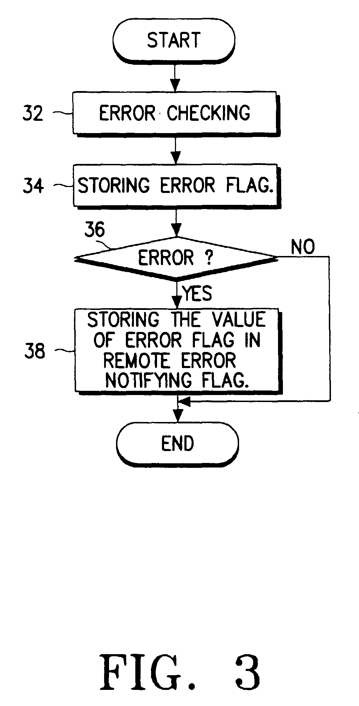

Now, the error checking steps of the facsimile transceiver are described in detail with reference to Fig. 3 showing the process flow. The controller 10 checks for facsimile errors in step 32 at specified time intervals according to time interrupt. Such facsimile errors are general communication errors, original copy jam, paper jam, and paper not loaded. The above error checking operation is performed by detecting the sensing signal generated by the sensor 24 after sensing the constituent elements of the facsimile transceiver.

After completing the error check, the controller 10 proceeds to step 34 to store the error information corresponding to the error checked in the above error flag. That is, if paper is not loaded or run out, the controller 10 sets the bit position 0 of the error flag to 1, and if paper is jammed, the bit position 1 is set to 1.

When the bit positions of the error flag are properly set and stored according to the error types as described above, the controller 10 proceeds to step 36 to check whether an error is detected. When an error is detected, the controller 10 proceeds to step 38, and otherwise terminates the error checking process. Besides, in the above step 38, the controller 10 stores the states of the bit positions 0,1,2 of the error flag in the bit positions 0,1,2 of the remote error notifying flag, and terminates the error checking process. As described above, when detecting an error in the error checking steps, the controller 10 stores the error information in the remote error notifying flag.

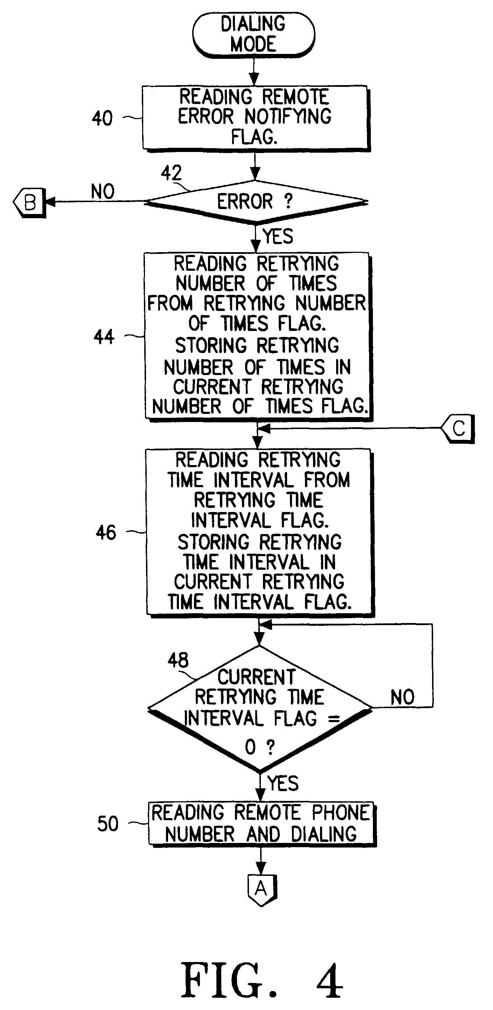

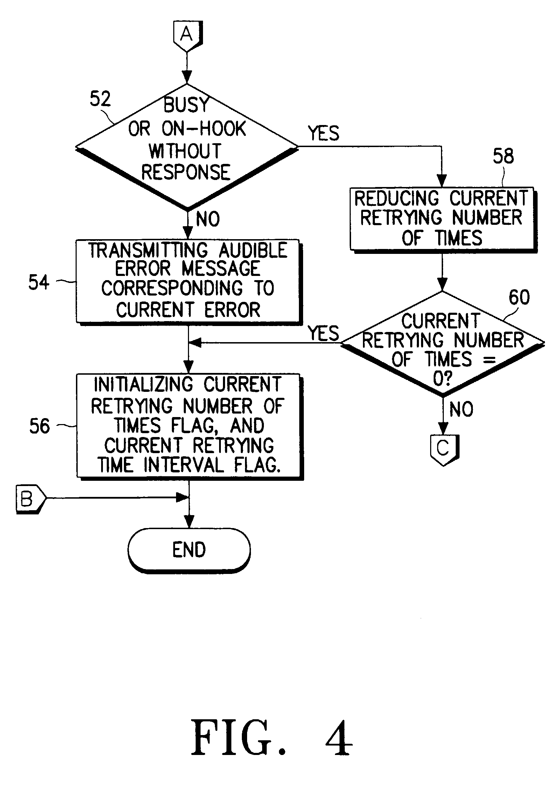

Besides, the controller 10 performs the remote error notifying operation at specified time intervals according to the time interrupt. The remote error notifying steps according to a preferred embodiment of the invention is described in detail with reference to Fig. 4 showing the process flow. The controller 10 performs the step 40 at specified time intervals, thereby reading the remote error notifying flag. When completing the reading of the remote error notifying flag, the controller 10 proceeds to step 42 to check whether any of the bit positions 0,1,2 of the remote error notifying flag represent the binary digit 1. When any one of the above bit positions 0,1,2 represents 1, the controller 10 takes it as an error corresponding to the binary digit 1, thereby proceeding to step 44. Otherwise, when none of the above bit positions 0,1,2 represents 1, the controller 10 terminates the error checking process.

In step 44, the controller 10 reads the retrying number of times from the retrying number of times flag. After reading out the retrying number of times, the controller 10 stores the retrying number of times in the current retrying number of times flag, which is then to be reduced each time a connection to the remote person could not be established successfully. Thereupon the controller 10 proceeds to step 46 to read out the retrying time interval from the retrying time interval flag and stores the retrying time interval in the current retrying time interval flag which is then to be reduced with time running. Thereafter the controller 10 proceeds to step 48 to check whether the value of the current retrying time interval flag is 0 (zero), whereby if the value of the current retrying time interval flag is 0, the controller 10 proceeds to step 50, and otherwise repeats step 48.

That is, when the value of the current retrying time interval flag is reduced by the timer to zero, the controller 10 proceeds to step 50 to read out the remote phone number to be notified, thereupon dialing the remote phone number. After successfully dialing the remote phone number, the controller 10 proceeds to step 52 to check whether the call receiver line is engaged, or remains on-hook for a specified time. When the call receiver is engaged or remains without response for a specified time, the controller 10 proceeds to step 58.

Otherwise, when the call receiver is connected with the call originator, the controller 10 proceeds to step 54 to make the audio processing unit 100 read out the related data corresponding to the error message from memory 18, thereby transmitting the resulting audio error message to the call receiver through the communication line. After completing the transmission of the above error message, the controller 10 proceeds to step 56 to initialize the currently retrying number of times flag and the current retrying time interval flag.

And in step 58, the controller 10 decreases the current retrying number of times, thereupon proceeding to step 60 to check whether the current retrying number of times is 0. As the result thereof, if the above current retrying number of times is 0, the controller 10 proceeds to step 56, and otherwise returns to step 46.

As described above, the invention provides means for notifying a remote person of the facsimile error even when there is no one in the vicinity of the facsimile transceiver, thereby enabling to take the proper steps to clear the error.

## Claims

1. Error notification method of a facsimile apparatus, comprising the steps of:
storing a phone number of a remote subscriber;
storing an error message;
checking an error state of the facsimile apparatus;
dialing said phone number upon detecting an error; and
transmitting said error message to said remote subscriber when said phone number is put through in response to said dialing.

2. Error notification method of claim 1, further comprising the steps of:
storing a retrying time interval;
waiting for expiration of said retrying time interval when the remote subscriber remains during the step of dialing without response for a given time; and
redialing said phone number.

3. Error notification method according to claims 1 or 2, further comprising the steps of:
storing a retrying number of times; and
redialing said phone number by said retrying number of times when the remote subscriber remains during the step of dialing without response for a given time.

4. Error notification method according to one of claims 1 to 3, wherein said error message is an audio message.

5. Error notification method according to one of claims 1 to 4, wherein said error state occurs upon paper jam, original copy jam and/or paper run out at the facsimile apparatus.

6. Facsimile apparatus comprising:
a memory (18) holding a phone number of a remote subscriber and an error message;
a sensor (24) sensing an error state of the facsimile apparatus;
transmission means (12,14) for transmitting data to a telephone line; and
notification means (10,100) for dialing the phone number and sending the error message to the remote subscriber when the sensor detects an error.

7. Facsimile apparatus according to claim 6, wherein said remote subscriber is a remote facsimile apparatus.

8. Facsimile apparatus according to claims 6 or 7, wherein said facsimile apparatus is a facsimile transceiver.
